# EUROPEAN PATENT SPECIFICATION

(11) **EP 1 055 343 B1**
(45) Date of publication and mention of the grant of the patent: **07.09.2005**
(21) Application number: 99903697.3
(22) Date of filing: 08.02.1999
(51) Int. Cl.: H04Q 7/38

(54) **A METHOD AND EQUIPMENT FOR CARRYING OUT SPECIAL FUNCTIONS IN A CELLULAR RADIO SYSTEM**
VERFAHREN UND GERÄT ZUR DURCHFÜHRUNG VON SPEZIALFUNKTIONEN IN EINEM ZELLULAREN FUNKSYSTEM
PROCEDE ET EQUIPEMENT POUR REALISER DES FONCTIONS SPECIALES DANS UN SYSTEME RADIOCELLULAIRE

(30) Priority: 09.02.1998 FI 980292
(43) Date of publication of application: 29.11.2000
(73) Proprietor: Nokia Corporation, 02150 Espoo (FI)
(72) Inventor: LAAKSONEN, Pirkko, FIN-33340 Tampere (FI); EEVA, Pentti, FIN-05460 Hyvinkää (FI)
(74) Representative: Äkräs, Tapio Juhani
(86) International application number: PCT/FI1999/000091
(87) International publication number: WO 1999/040749

(56) References cited:
- EP-A1- 0 658 014
- WO-A1-97/38542
- WO-A1-98/58515
- US-A- 5 557 656

## Description

### BACKGROUND OF THE INVENTION

The invention relates to a radio system and particularly to a method and equipment implementing the method for carrying out special functions in a cellular radio system where terminals are primarily arranged to be camped on cells defined as priority cells supporting at least one subscriber class associated with the terminal. The cells send information on the priority of the cell and the subscriber classes supported by the cell.

Most recent radio systems are designed in such a manner that all subscribers of the radio system are able to operate with their terminals in the entire network area and to utilize the essential functions of the system. The radio system has to offer adequate services for organizations in different situations and environments. For a mobile subscriber it is very important to get in touch with his/her organization and also to be able to maintain the connection when moving from one place to another. In order to obtain an extensive coverage, terminals and some parts of the network, particularly at the radio interface, are arranged to different functional conditions and environments in various ways, for example, regarding used transmission powers, directing antennas etc. Management of such elements has conventionally been implemented to a radio system by means of fixed equipment and unit-specific definitions causing unnecessary inflexibility to the configuration of the system.

An example of such an implementation is the public safety and security network which must offer reliable services for organizations that may simultaneously operate in the air and on the ground. Radio terminals mounted in aircrafts, e.g. airplanes and helicopters, have to meet international and national norms, the precise regulations must thus also be fulfilled by the terminals meant to be used in the operative use of an organization. Below such a terminal to be mounted in an aircraft will be referred to as an air radio irrespective of whether the terminal is a simple transceiver unit or a subscriber unit capable of more intelligent operations.

Special air cells are typically connected to the system in order to handle the traffic of air radios. The base stations of the air cells are mainly designed to be applicable to the needs of air radios by adjusting the transmission power, antenna direction, height of the antenna mast and other properties accordingly. Since the number of subscribers using an air radio is typically small, the air cells can be dimensioned to a fairly small number of channels. However, it is important that other radio equipment used in the system, which will be referred to as ground radios below, do not cause load to the air cells with, for example, unnecessary registration attempts. Since the air cells are generally designed to serve radios moving in the air, their coverage ends close to the ground. An air radio has to move rapidly and flexibly from an air cell to a ground cell and vice versa so that the calls will not be disconnected when approaching the ground. In addition, the carrying capacity of a radio signal is significantly wider in the air than on the ground, the radio signal sent by an air radio therefore often reaches several ground cells. That is why it is important to make sure that the air radios do not cause interference to other cells, for example, the normal cells on the ground.

In EP-A1-658 014 a solution is described where a cellular telecommunications system comprises satellites and radio units, each having an embedded class identifier. When it is desirable to limit the number of the users, the satellite broadcasts on broadcast channel the set of prohibited class identifiers. The demand of each cell is measured or predicted by calculations, and if the demand approaches a predetermined level, then the satellite broadcast the prohibited classes. A radio unit selects among plurality of antenna beams the strongest antenna beam supporting the radio unit (i.e. a beam in which its class identifier is not prohibited).

The properties described above have conventionally been carried out in radio systems by terminal-specific definitions based on cell identifiers or radio frequencies. Typically, during initialization certain adjustments have been performed on the terminal, on the basis of which the operation of the terminal has been prevented or permitted only in cells having a particular cell identifier or at particular radio frequencies. By means of the definitions the terminal may have been arranged to prioritize certain cells having a particular cell identifier. The arrangement is fairly inflexible regardless of its many advantages, since the minor changes in the structure of the system cause a need to redefine the equipment. For example, in order to add a new air cell the operator has to collect all air radios from the field for adding the new cell identifier to their air cell register.

### BRIEF DESCRIPTION OF THE INVENTION

An object of the invention is to provide a method and equipment implementing the method enabling a radio system to be designed and utilized in such a manner that terminals and cells associated with special functions can flexibly be connected to the radio system. The objects of the invention are achieved with a method and a system, characterized by what is disclosed in the independent claims. The preferred embodiments of the invention are disclosed in the dependent claims.

The idea of the invention is that a radio system comprises means for defining priority cells and for dividing radio subscribers into subscriber classes. The cells send information about the priority of the cell and the subscriber classes supported by the cell, and provide, if needed, the corresponding information also concerning selected neighbour cells. A radio terminal in the area listens to the information sent by the cells and is mainly camped only on such a cell that supports the subscriber class associated with the radio terminal. If the cells supporting the subscriber class of the terminal include a priority cell, the radio is camped thereon.

In the solution of the invention the subscribers are divided into different subscriber classes: those carrying out special functions and those not, when a particular special function is defined. A cell associated with a special function is defined to support a subscriber class or classes associated with said special function only and the cell is also defined as a priority cell. The terminal is arranged to update its subscriber class at least when registering into the system and in connection with a possible change in a subscriber class. The subscriber classes provide a possibility for the radio terminals associated with special functions to operate both in the cells associated with special functions and also in other, so called normal cells.

On account of the arrangement of the invention the cells associated with special functions are not loaded with unnecessary registration attempts, since based on the announced subscriber class information the terminals associated with special functions mainly try to register only into the cells supporting the special function. Because of the priority of the cells associated with special functions the terminals associated with a special function always select a cell supporting that special function when it is possible on the basis of other criteria, although their subscriber class is supported also by other cells. However, since the other cells support terminals associated with special functions too, the transfer from a special function cell to a normal cell is smooth.

When a subscriber takes a terminal into use, his/her subscriber data is attached to the terminal data. The subscriber class of a terminal can be formed on the basis of a combination of said data, in which case the data can be arranged to be automatically updated to the system at registration. The subscriber class of the terminal can also be arranged to be defined in other ways, for example, on the basis of a message concerning the subscriber class provided through a user interface of a subscriber terminal. A subscriber class of the invention is preferably a dynamic property associated with the subscriber and/or the terminal. The subscriber class can also be a fixed operator definition, in which case it is bound to the identifier and/or the terminal of the subscriber.

The invention has the advantage that by defining cells associated with new special functions according to the invention, new special function cells can be added to the system without having to collect the terminals for redefinition. Correspondingly, a subscriber may, if needed, operate as an ordinary subscriber or as a special function subscriber, for example, by attaching his/her subscriber data to the property data of a similar terminal, for example, by means of a data message or a personal transferable subscriber identifier module.

### BRIEF DESCRIPTION OF THE DRAWINGS

In the following the invention will be described in greater detail in connection with the preferred embodiments with reference to the accompanying drawings, in which:
Figure 1 illustrates the structure of a TETRA system,
Figure 2 illustrates the cellular structure of a radio system, to which air cells supporting the function of air radios, radio terminals used in aircrafts, are connected,
Figure 3 is a block diagram showing a terminal of the invention,
Figure 4 shows an arrangement of the invention in a radio system.

### A DETAILED DESCRIPTION OF THE INVENTION

The invention can be applied for arranging desired special functions in radio systems comprising means for providing the above definitions associated with the priority of a cell and the subscriber class of a terminal. In the following the invention will be described in connection with the digital TETRA system (Terrestrial Trunked Radio) using as an example the matching of elements needed to service units operating in the air and on the ground, without restricting the invention to said system or special function. As to the TETRA system, reference is made to publication ETS 300 392-2 "Radio Equipment and Systems (RES); Trans-European Trunked Radio (TETRA); Voiceplus Data (V+D); Part 2: Air Interface (Al)", March 1996.

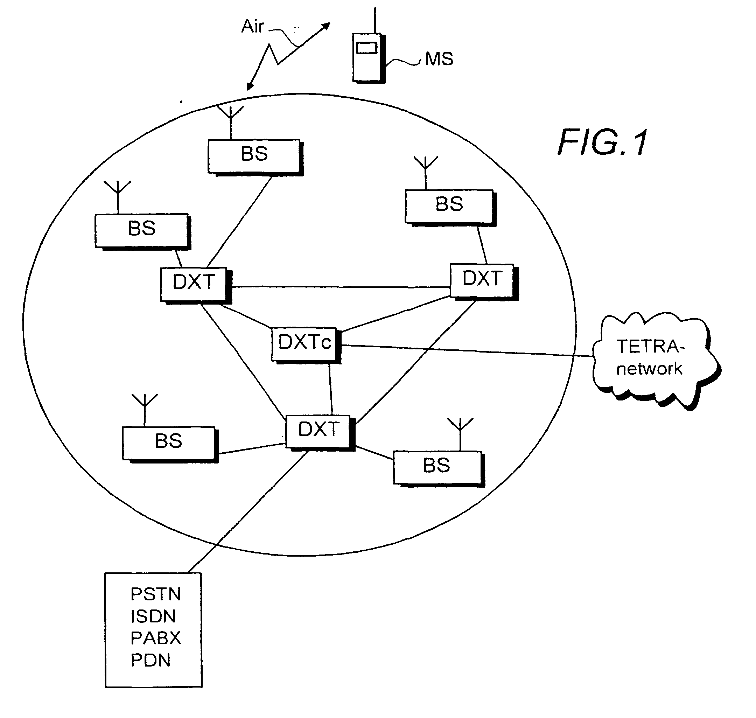

Figure 1 shows an exemplary structure of a TETRA system. A Mobile Station MS communicates with a Base Station BS over the radio path Air. The air interface is defined in the TETRA standard. Each base station BS is connected by a circuit to a Digital Exchange DXT for TETRA of the fixed transmission network. The TETRA exchanges DXT are connected to other exchanges DXT and to a Digital Central Exchange DXTc for TETRA by a fixed circuit, the. DXTc being an exchange to which other exchanges DXT and/or other central exchanges DXTc are connected so as to provide alternative paths for the traffic. The interface to another TETRA network is here arranged in the central exchange DXTc, but it can also be located in the other exchanges DXT. The external interfaces, defined by the standard, to the Public Switched Telephone Network PSTN, the Integrated Services Digital Network ISDN, the Private Automatic Branch Exchange PABX and the Packet Data Network PDN are here located in one exchange DXT, but they can also be arranged in every exchange. The TETRA transmission network also comprises other interfaces and peripheral units, which are not shown in the Figure. They include, for example, network management systems and dispatcher systems.

The radio system users also include organizations that operate in various conditions, like under ground, on the ground, in the air or at sea. In order to provide essential services for all organizations as extensively as possible, terminals and network elements arranged mainly to perform certain special functions are typically connected to the system. The solutions added to the system in order to provide services for the subscribers operating in the air can be mentioned as an example of such a procedure.

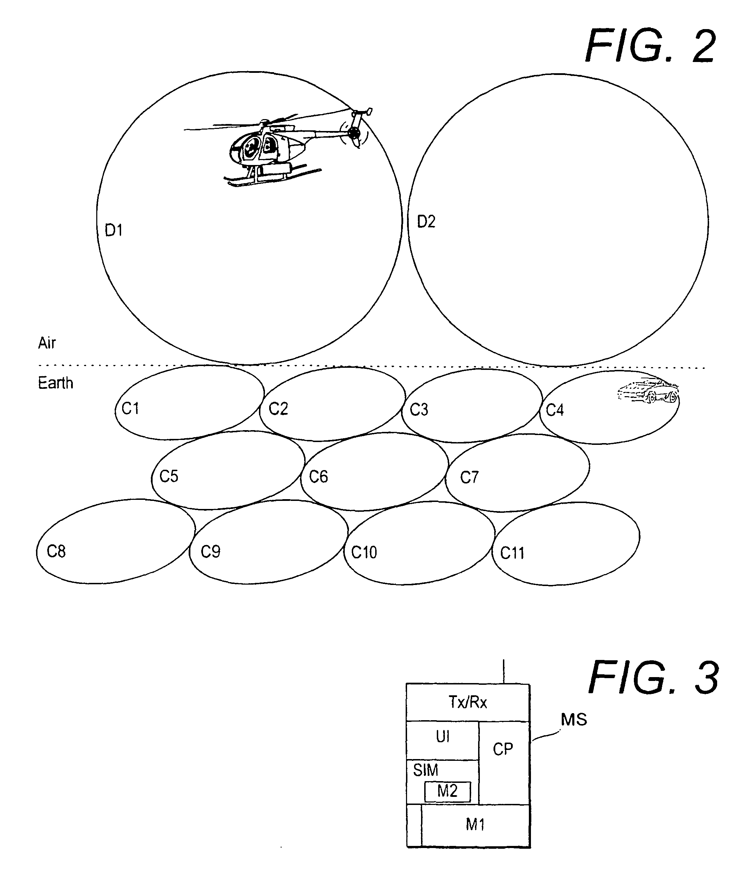

Figure 2 illustrates the cellular structure of a radio system, to which air cells, for radio terminals used in aircrafts, supporting the operation of air radios are also connected. It should be noted that the present solution does not substantially examine the radios that the aircraft needs to maintain contact with air traffic control, but terminals operating through a radio interface in aircrafts and utilized in the operative function of a subscriber or subscribers. The properties and the use of all radios used in the air are strictly restricted by virtue of national and international regulations. These regulations also concern the terminals of the invention.

The base stations of air cells are substantially planned in such a manner that the cell coverage is directed high into the air space, and that the coverage conceivably ends in the vicinity of the ground. Owing to the few air subscribers the number of radio channels in the air cell is generally small. Here, it is assumed that the location of the base station is fixed, however, without restricting the invention to merely fixed base stations.

Through a broadcast control channel each base station provides information about its operation and, if needed, also information about selected neighbour cells. The terminal listens to the broadcast control channel information available in the area and based thereon decides whether to camp on the cell. In the TETRA system, for example, a data unit D-MLE-SYSINFO PDU comprising a Subscriber class element is transmitted as a base station broadcast. This element is typically a bit map comprising 16 characters by which the terminal population can correspondingly be divided to belong to 16 subscriber classes at the most. The same data unit also comprises a BS service details element comprising the data in one bit indicating whether the cell is a priority cell or not.

Subscriber class data associated with the division of terminals can be attached to an Individual TETRA Subscriber Identity ITSI. Based on the subscriber class data the system can in the first preferred embodiment control the local operation of the terminal used by said subscriber. In the first preferred embodiment the system decides upon the subscriber class data of each subscriber using the data transmitted by the terminal. The subscriber class data may be tightly tied to the subscriber identity ITSI or to the terminal, or it may change dynamically on the basis of the data provided for the system by the terminal or the subscriber. When the terminal registers into the system in the first preferred embodiment, the system informs the terminal to which subscriber class it belongs. In a second preferred embodiment the terminal identifies its subscriber class on the basis of some said data. If the terminal itself identifies its subscriber class, it does not necessarily have to inform the system about the subscriber class, since based on the data of the invention provided by the system the terminal is capable of identifying, for example, whether the cell supports the subscriber class of the terminal.

When the terminal moving in the network area detects, based on the broadcast, that the cell does not support the subscriber class of the terminal, it does not try to register into the cell, if another cell supporting the subscriber class of the terminal is available. If a cell supporting said subscriber class is not found, the terminal may also register into a cell that does not support said subscriber class, but then only operations associated with certain cases, typically emergencies, are possible. Hence, the terminal always tends to search for a cell that supports the subscriber class of the terminal and tries to register thereto.

In the TETRA system the subscriber class can in accordance with the invention be arranged to be updated, for example, when a subscriber is being connected to the system or when a terminal is registered into a cell. In a preferred embodiment of the present invention the subscriber class of the terminal is defined on the basis of a combination of terminal type and subscriber data of a subscriber using the terminal. The subscriber data is included in a subscriber identification unit, a SIM card, which is detachably connected to the terminal. Subscriber data, from which the subscriber class can be concluded, may include, for example, the subscriber identity of a subscriber and naturally the subscriber class or the data indicating the subscriber class stored in the memory of an identification unit.

Figure 3 is a block diagram showing the terminal of the invention including an actual terminal and a subscriber identification unit SIM detachably connected thereto. A SIM card (Subscriber Identity Module) used as the subscriber identification unit is a smart card to be located in the actual terminal. The smart card includes, for example, data for identifying the subscriber, such as the ITSI number individualizing the mobile station subscriber, and a certain amount of memory M2. The actual terminal comprises a transceiver Tx/Rx including antennas, a user interface UI, a controller CP and more memory M1.

When a subscriber starts using a terminal, he/she connects his/her personal SIM card thereto. In the first preferred embodiment the terminal is arranged to connect the subscriber identity obtained from the SIM card and the radio type included in the terminal and to provide the system with the data at registration. When accepting the registration the system confirms the subscriber class of the terminal. When the subscriber starts using another terminal he/she may transfer his/her SIM card to the new terminal, in which case the subscriber class of the terminal is correspondingly redefined at registration based on the subscriber data and terminal type. In the first preferred embodiment the subscriber may himself/herself provide information on the subscriber class through the user interface. In the second preferred embodiment the controller CP of the terminal is arranged to identify the subscriber class from the data stored in the memory M1 of the terminal and/or from the data obtained from the SIM card and possibly from the data provided by the subscriber received through the user interface UI.

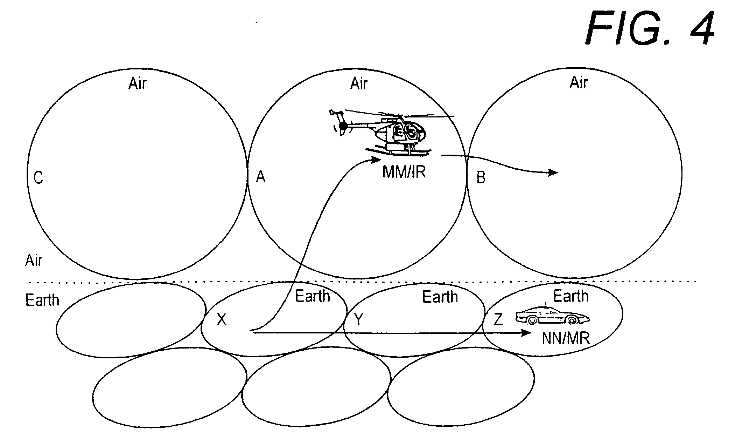

Figure 4 illustrates the arrangement of the first preferred embodiment of the invention. The Figure shows a radio system, to which air cells A, B, C and ground cells X, Y, Z are defined. In the air radio case the subscribers are divided into two categories: air subscribers and other subscribers. Radio terminals intended to be used by air subscribers are arranged to register their users as air subscribers, i.e. to support an air subscriber class AIR. The other radio terminals are arranged to register their subscribers into a ground subscriber class GROUND.

The subscriber class element of the air cells A, B and C included in the cell broadcasting indicates that the cells do not support the subscriber class GROUND but do support the subscriber class AIR. In addition, the BS service details element of the air cells included in the cell broadcasting indicates that the cell is a priority cell. Ground cells correspondingly indicate that they support both the subscriber class AIR and the subscriber class GROUND, but indicate that the cells are not priority cells. Furthermore, all cells send information about their neighbour cells, which may be either air cells or ground cells, information about the subscriber classes supported by the cells and whether a neighbour cell is a priority cell or not. In the case shown in Figure 4 the air cell A, for example, sends information about its air neighbours B and C and its ground neighbours X, Y and Z below. Correspondingly the ground cell X, for example, provides information on the ground neighbours Y and Z and on the air cell A above. A ground cell may have only one air neighbour, since the air cells are generally significantly larger than the ground cells.

Subscribers MM and NN register into the network through the ground cell X located at the airport. The subscriber MM enters the aircraft and starts using the radio mounted to the aircraft. When the MM places the SIM card into an air radio IR, it initiates the updating function of the radio terminal informing the system that the MM is now using an air radio. The system updates the data of subscriber MM, such as location, and informs the radio IR that it now belongs to the subscriber class AIR. Correspondingly the subscriber NN places his/her SIM card into a ground radio MR, in which case the system is informed about the NN using the ground radio MR. Correspondingly the system informs the ground radio that it now belongs the subscriber class GROUND.

The ground cell X supports the subscriber classes AIR and GROUND, both radios thus registering at first into cell X. Simultaneously both radios listen to the broadcasts of the neighbour cells and tend to register into a more appropriate cell. The ground radio MR observes the air cell A above, but since the air cells do not support the subscriber class GROUND, the ground radio does not try to register into the air cell. The air radio also observes the air cell A above, and detects that it supports the subscriber class AIR and is a priority cell. On this account, as soon as the air cell A can be received well enough, the air radio IR tends to register thereto. When the air radio IR travels in the air and has already registered into an air cell, both the current radio cell and the neighbour cell are priority cells, which is why the definition concerning priority between air cells does not substantially affect the cell change decisions. If the air radio moves into an environment, where none of the air cells is received well enough, it is then temporarily registered into a ground cell. However, as soon as one of the air cells is received well enough, the air radio IR tends to register into an air cell due to the priority of the air cell.

A radio signal is carried higher and a much longer distance in the air than near the ground. A terminal travelling in the air space may thus cause significant interference for the operation of the ground cells. In the arrangement of the invention air cells are defined as priority cells. Therefore the terminals, whose subscriber class the air cells support, are primarily camped on an air cell if there are both ground cells and air cells to choose from. Since the air cells do not support the subscriber class of other terminals, the other terminals do not tend to register into air cells despite the priority of the air cells, and do not unnecessarily load the limited channel capacity of the air cells. The air radios, whose subscriber class the air cells support, tend to leave the ground cell as soon as one of the air cells can be heard well enough. The use of air cells thus becomes more effective and interference caused by air radios to ground cells is minimized.

Since the decision to camp on air cells or ground cells is based on the subscriber class and the priority of the cell, and not as previously on the location area identifiers of the cell, adding a new air cell to the system does not cause reparameterization to the terminals used. Arranging the air cell parameters as described above, the terminals can be automatically directed to the desired cells as desired.

Since the roaming between air cells and ground cells is flexible, when moving from ground channels available close to the ground to air channels available higher up in the air or when returning back to the ground, the ongoing calls can continue without interruptions unlike before. In prior art solutions the transition between air cells and ground cells causes interruptions in use.

The above embodiment describes how special function cells are arranged in order to arrange the terminals used in aircrafts to the system. However, this is not the only way to apply the invention, which can also be applied to arrange other special functions to the radio system. Correspondingly, for example, special cells mainly intended for emergency and rescue operations can be arranged to the radio system. The operative area of the system typically includes several areas, the extensive coverage of which is not economically justified. In order to maintain a certain rescue ability it should, however, be possible to arrange cells with a limited channel capacity to such destinations. The use of such cells would be restricted to certain central rescue resources and only to emergencies for ordinary subscribers. As the invention suggests, the subscribers are divided into rescue subscribers and other subscribers, the special cells into priority cells and to support the rescue subscriber class only. The other cells also support the rescue subscriber class. Sufficient resources are thus provided to support special functions, and the transition from a special cell to a normal operative environment is smooth. Adding resources does not cause any actions concerning reprogramming of terminals, such cells can thus be very rapidly added to the destination area. However, normal radios do not waste the limited resources of the cell with unnecessary radio traffic.

By arranging the definition of the terminal subscriber class to be given in accordance with the invention at least when the subscriber starts to use a particular terminal, the subscriber is provided with an easy chance to act according to situation using his/her subscriber identification as a special subscriber (e.g. an air subscriber) or as an ordinary subscriber. In the above embodiment the subscriber class of the terminal is defined on the basis of the subscriber data in the SIM card and the terminal type. This is, however, only one preferable alternative for defining the subscriber class. The message can be implemented manually, in which case the subscriber informs the system through a terminal user interface UI whether he/she operates as an air subscriber or as another subscriber. The message can be, for example, a short data message, and the system can be arranged to automatically update the subscriber class information. If the system uses a manned operator centre, the definition can be arranged to be provided from the operator on the basis of the information the subscriber has given, for example, as a voice call or as a data message. However, it is essential, particularly when a dynamic subscriber class definition is used, that the terminal and the system are arranged to update the terminal subscriber class in connection with terminal registration or a change concerning the subscriber class. An example of such a change is a subscriber who starts using another terminal. If said special function is such that the same terminal is applicable to be used in normal and special function environments, the subscriber may select an appropriate moment for carrying out the selection of the subscriber class, for example, as described above.

Another embodiment of the invention providing the same effect is an arrangement where both the air subscriber class AIR and ground subscriber class GROUND are allocated to the air subscriber MM. The air cells A, B, C are defined as priority cells and they support the air subscriber class AIR only, and the ground cells support the ground subscriber class GROUND only. Then, the ground subscribers do not tend to register into the air cells, but the air subscribers can register into both air and ground cells. Since the air cells are priority cells, air radios primarily register into the air cells.

## Claims

1. A method for carrying out special functions in a cellular radio system where terminals (MS) are arranged to give priority to camping on cells defined as priority cells supporting at least one subscriber class associated with the terminal (MS), if such a cell is available, the method comprising
sending information in the cell on the priority of the cell and the subscriber classes supported by the cell for controlling which terminals (MS) are allowed to camp on the cell, dividing the subscribers into special function subscribers and other subscribers, and
dividing the cells into special function cells (A, B, C, D1, D2) and normal cells (X, Y, Z, C1...C11),
**characterized by**
defining the cells associated with at least one special function as priority cells (A, B, C, D1, D2),
defining that the priority cells (A, B, C, D1, D2) in which the terminals (MS) associated with the special function are desired to operate, support the subscriber class associated with said special function,
defining that the normal cells (X, Y, Z, C1...C11) in which the terminals (MS) associated with the special function are desired to be able to operate, support the subscriber class associated with said special function,
defining that the priority cells (A, B, C, D1, D2) support only certain subscriber classes associated with special functions, and
directing the terminals (MS) associated with a special function to camp on respective priority cells (A, B, C, D1, D2) whenever such a cell is available.

2. A method as claimed in claim 1, **characterized by** defining the cells intended to be used only by air radios as priority cells and to support the radio terminals (MS) belonging to an air subscriber class, and by also defining at least a part of the normal cells of the system to support the air radios.

3. A method as claimed in claim 1, **characterized by** defining the cells allocated only for emergencies as priority cells and to support the radio terminals belonging to a subscriber class associated with emergencies, and by also defining at least a part of the normal cells of the system to support said radio terminals belonging to the subscriber class associated with emergencies.

4. A method as claimed in claim 1, **characterized by** defining the normal cells (X, Y, Z, C1...C11) in the system to support radio terminals belonging to the subscriber classes not associated with special functions.

5. A cellular radio system, where parameters are used to group subscribers into subscriber classes, and said parameters can be used to define the supported subscriber classes for the cells, and where selected cells can be defined as priority cells, on which the terminals (MS) having an appropriate subscriber class are arranged to camp, if such a cell is available, and where base stations (BS) are arranged to send information in the cell on the priority of the cell and the subscriber classes supported by the cell for controlling which terminals (MS) are allowed to camp on the cell, wherein cells that are not defined as priority cells are defined as normal cells,
**characterized in that**
the cells associated with a selected special function are defined as priority cells and to support the subscriber class associated with said special function,
at least a part of the normal cells is also arranged to support the subscriber class associated with said special function, and
the terminals (MS) associated with a special function are arranged to camp on respective priority cells (A, B, C, D1, D2) whenever such a cell is available.

6. A radio system as claimed in claim 5, **characterized by** defining the cells intended to be used only by air radios as priority cells (A, B, C, D1, D2) and to support the radio terminals (MS) belonging to the air subscriber class, and by also defining at least a part of the normal cells (X, Y, Z, C1...C11) in the system to support the air radios.

7. A radio system as claimed in claim 5, **characterized by** defining the cells allocated only for emergencies as priority cells and to support the radio terminals belonging to the subscriber class associated with emergencies, and by also defining at least a part of the normal cells in the system to support said radios belonging to the subscriber class associated with emergencies.

8. A radio system as claimed in claim 7, **characterized by** defining the normal cells (X, Y, Z, C1...C11) in the system to support radio terminals belonging to the subscriber classes not associated with special functions.

9. A radio system as claimed in claim 5, **characterized in that**, when a terminal (MS) is taken into use in a particular subscriber class, the terminal (MS) is arranged to update the subscriber class, and the information concerning the subscriber class of the terminal (MS) is transferred to be available for selected parts of the system.

10. A radio system as claimed in claim 9, **characterized in that** the terminal (MS) is arranged to identify its subscriber class based on data stored in the terminal (MS).

11. A radio system as claimed in claim 9, **characterized in that** the terminal (MS) is arranged to identify the subscriber class of the terminal (MS) based on terminal and/or subscriber data obtained from the terminal (MS).

12. A radio system as claimed in claim 9, 10 or 11, **characterized in that** the subscriber may provide information on the subscriber class used through a user interface of the terminal (MS).

13. A radio system as claimed in claim 11 or 12, **characterized in that** the system is arranged to
inform the terminal (MS) about the subscriber class,
update, at any given time, the parameters that are used to group subscribers into subscriber classes, and
update, at any given time, the parameters that are used to define the supported subscriber classes for the cells.

14. A radio system base station (BS) intended for carrying out special functions, where parameters are used to define subscriber classes supported by a cell, wherein the cell can be defined as a priority cell, on which terminals (MS) having an appropriate subscriber class are arranged to camp, if the cell is available, the base station (BS) being arranged to send information in the cell (A, B, C, D1, D2) on the priority of the cell and the subscriber classes supported by the cell for controlling which terminals (MS) are allowed to camp on the cell (A, B, C, D1, D2),
**characterized in that**
said cell (A, B, C, D1, D2) is defined as a priority cell in which the terminals (MS) associated with a special function are desired to operate,
said cell (A, B, C, D1, D2) is defined to support the subscriber class associated with the special function,
said cell (A, B, C, D1, D2) is defined to support only certain subscriber classes associated with special functions, and
said cell (A, B, C, D1, D2) is arranged to direct a terminal (MS) associated with an appropriate special function subscriber class to camp on the cell (A, B, C, D1, D2) whenever the cell (A, B, C, D1, D2) is available to the terminal (MS).

15. A base station as claimed in claim 14, **characterized in that** the base station (BS) is arranged to support terminals (MS) associated with the air subscriber class.

16. A base station as claimed in claim 14, **characterized in that** the base station (BS) is arranged to support radio terminals (MS) belonging to the subscriber class associated with emergencies.

17. A terminal (MS) operating in a cellular radio system, arranged to camp on radio cells supporting the subscriber class of a subscriber using the terminal and to give priority to camping on selected priority cells (A, B, C, D1, D2), **characterized in that** the terminal (MS) is arranged to
update the subscriber class, in response to the fact that the terminal (MS) is taken into use in a particular subscriber class, the information about the terminal subscriber class then being transferred to be available for selected parts of the system,
camp on a priority cell (A, B, C, D1, D2) supporting the subscriber class of the subscriber using the terminal (MS) whenever such a cell is available, and
camp on a normal cell supporting the subscriber class of the subscriber using the terminal (MS) only if no priority cell is available.

18. A terminal as claimed in claim 17, **characterized in that** the terminal is arranged to identify its subscriber class based on data stored in the terminal (MS) and/or the subscriber data of the terminal user.

19. A terminal as claimed in claim 17, **characterized in that** the terminal (MS) is arranged to receive information about its subscriber class from the system.

20. A terminal as claimed in claim 17, **characterized in that** the terminal (MS) is arranged to identify its subscriber class based on data provided through a user interface of the terminal (MS) of the subscriber.

## Patentansprüche

1. Verfahren zum Ausführen spezieller Funktionen in einem zellularen Funksystem, wobei Endgeräte (MS) eingerichtet sind, dem Ausführen von Camping in Zellen Priorität zu geben, die als Prioritätszellen bestimmt sind, die mindestens eine Teilnehmerklasse unterstützen, die dem Endgerät (MS) zugeordnet ist, wenn eine solche Zelle verfügbar ist, wobei das Verfahren umfasst
- Senden von Informationen in der Zelle über die Priorität der Zelle und die von der Zelle unterstützten Teilnehmerklassen, um zu steuern, welchen Endgeräten (MS) ein Ausführen von Camping in der Zelle erlaubt ist, wobei die Teilnehmer in Teilnehmer mit speziellen Funktionen und andere Teilnehmer aufgeteilt werden; und
- Aufteilen der Zellen in Zellen mit speziellen Funktionen (A, B, C, D1, D2) und normale Zellen (X, Y, Z, C1 ... C11);
**gekennzeichnet durch**
- Bestimmen der Zellen, die mindestens einer speziellen Funktion zugeordnet sind, zu Prioritätszellen (A, B, C, D1, D2);
- Bestimmen, dass die Prioritätszellen (A, B, C, D1, D2), in welchen die Endgeräte (MS) zu betreiben gewünscht werden, die der speziellen Funktion zugeordnet sind, die Teilnehmerklasse unterstützen, die der speziellen Funktion zugeordnet ist;
- Bestimmen, dass die normalen Zellen (X, Y, Z, C1 ... C11), in welchen gewünscht wird, dass die Endgeräte (MS) betrieben werden können, die der speziellen Funktion zugeordnet sind, die Teilnehmerklasse unterstützen, die der speziellen Funktion zugeordnet ist;
- Bestimmen, dass die Prioritätszellen (A, B, C, D1, D2) nur bestimmte Teilnehmerklassen unterstützen, die speziellen Funktionen zugeordnet sind; und
- Leiten der Endgeräte (MS), die einer speziellen Funktion zugeordnet sind, zum Ausführen von Camping in jeweiligen Prioritätszellen (A, B, C, D1, D2), wenn eine solche Zelle verfügbar ist.

2. Verfahren nach Anspruch 1, **gekennzeichnet durch** Bestimmen der Zellen, die nur von Funkvorrichtungen verwendet werden sollen, zu Prioritätszellen, und dazu, die Funkendgeräte (MS) zu unterstützen, die zu einer Funk-Teilnehmerklasse gehören, und **dadurch**, dass auch mindestens ein Teil der normalen Zellen des Systems dazu bestimmt wird, die Funkvorrichtungen zu unterstützen.

3. Verfahren nach Anspruch 1, **gekennzeichnet durch** Bestimmen der Zellen, die nur für Notfälle zugewiesen sind, zu Prioritätszellen, und dazu, die Funkendgeräte (MS) zu unterstützen, die zu einer Teilnehmerklasse gehören, die Notfällen zugeordnet ist, und **dadurch**, dass auch mindestens ein Teil der normalen Zellen des Systems dazu bestimmt wird, die Funkendgeräte zu unterstützen, die zu der Teilnehmerklasse gehören, die Notfällen zugeordnet ist.

4. Verfahren nach Anspruch 1, **gekennzeichnet durch** Bestimmen der normalen Zellen (X, Y, Z, C1 ... C11) in dem System dazu, Funkendgeräte zu unterstützen, die zu den Teilnehmerklassen gehören, die nicht speziellen Funktionen zugeordnet sind.

5. Zellulares Funksystem, wobei Parameter verwendet werden, um Teilnehmer in Teilnehmerklassen zu gruppieren, und wobei die Parameter verwendet werden können, um die unterstützten Teilnehmerklassen für die Zellen zu bestimmen, und wobei ausgewählte Zellen als Prioritätszellen bestimmt werden können, auf welchen die Endgeräte (MS) mit einer geeigneten Teilnehmerklasse eingerichtet sind, Camping auszuführen, wenn eine solche Zelle verfügbar ist, und wobei Basisstationen (BS) eingerichtet sind, Informationen in der Zelle über die Priorität der Zelle und die von der Zelle unterstützten Teilnehmerklassen zu senden, um zu steuern, welchen Endgeräte (MS) es erlaubt ist, in der Zelle Camping auszuführen, wobei Zellen, die nicht zu Prioritätszellen bestimmt sind, zu normalen Zellen bestimmt sind,
**dadurch gekennzeichnet, dass**
- die Zellen, die einer ausgewählten speziellen Funktion zugeordnet sind, zu Prioritätszellen bestimmt sind, und dazu, die Teilnehmerklasse zu unterstützen, die der speziellen Funktion zugeordnet ist;
- mindestens ein Teil der normalen Zellen auch eingerichtet ist, um die Teilnehmerklasse zu unterstützen, die der speziellen Funktion zugeordnet ist; und
- die Endgeräte (MS), die einer speziellen Funktion zugeordnet sind, eingerichtet sind, Camping in jeweiligen Prioritätszellen (A, B, C, D1, D2) ausführen, wenn eine solche Zelle verfügbar ist.

6. Funksystem nach Anspruch 5, **gekennzeichnet durch** Bestimmen der Zellen, die nur von Funkvorrichtungen verwendet werden sollen, zu Prioritätszellen (A, B, C, D1, D2), und dazu, und dazu, die Funkendgeräte (MS) zu unterstützen, die zu der Funk-Teilnehmerklasse gehören, und **dadurch**, dass auch mindestens ein Teil der normalen Zellen (X, Y, Z, C1 ... C11) in dem System dazu bestimmt wird, die Funkvorrichtungen zu unterstützen.

7. Funksystem nach Anspruch 5, **dadurch gekennzeichnet, dass** die Zellen, die nur für Notfälle zugewiesen sind, zu Prioritätszellen bestimmt werden, und dazu, die Funkendgeräte zu unterstützen, die zu einer Teilnehmerklasse gehören, die Notfällen zugeordnet ist, und **dadurch**, dass auch mindestens ein Teil der normalen Zellen in dem System dazu bestimmt wird, die Funkendgeräte zu unterstützen, die zu der Teilnehmerklasse gehören, die Notfällen zugeordnet ist.

8. Funksystem nach Anspruch 7, **dadurch gekennzeichnet, dass** die normalen Zellen (X, Y, Z, C1 ... C11) in dem System dazu bestimmt werden, Funkendgeräte zu unterstützen, die zu den Teilnehmerklassen gehören, die nicht speziellen Funktionen zugeordnet sind.

9. Funksystem nach Anspruch 5, **dadurch gekennzeichnet, dass**, wenn ein Endgerät (MS) in einer bestimmten Teilnehmerklasse in Benutzung genommen wird, das Endgerät (MS) eingerichtet ist, die Teilnehmerklasse zu aktualisieren, und die Informationen, welche die Teilnehmerklasse des Endgeräts (MS) betreffen, übertragen werden, um für ausgewählte Teile des Systems verfügbar zu sein.

10. Funksystem nach Anspruch 9, **dadurch gekennzeichnet, dass** das Endgerät (MS) eingerichtet ist, seine Teilnehmerklasse basierend auf Daten zu ermitteln, die in dem Endgerät (MS) gespeichert sind.

11. Funksystem nach Anspruch 9, **dadurch gekennzeichnet, dass** das Endgerät (MS) eingerichtet ist, die Teilnehmerklasse des Endgeräts (MS) basierend auf Endgeräte- und/oder Teilnehmerdaten zu ermitteln, die von dem Endgerät (MS) erhalten werden.

12. Funksystem nach Anspruch 9, 10 oder 11, **dadurch gekennzeichnet, dass** der Teilnehmer Informationen über die verwendete Teilnehmerklasse durch eine Benutzerschnittstelle des Endgeräts (MS) bereitstellen kann.

13. Funksystem nach Anspruch 11 oder 12, **dadurch gekennzeichnet, dass** das System eingerichtet ist, um
- das Endgerät (MS) über die Teilnehmerklasse zu informieren;
- zu jedem beliebigen Zeitpunkt die Parameter zu aktualisieren, die verwendet werden, um Teilnehmer in Teilnehmerklassen zu gruppieren;
- zu jedem beliebigen Zeitpunkt die Parameter zu aktualisieren, die verwendet werden, um die unterstützten Teilnehmerklassen für die Zellen zu bestimmen.

14. Funksystembasisstation (BS), vorgesehen zum Ausführen von speziellen Funktionen, wobei Parameter verwendet werden, um Teilnehmerklassen zu bestimmen, die von einer Zelle unterstützt werden, wobei die Zelle als eine Prioritätszelle bestimmt sein kann, auf welcher Endgeräte (MS) mit einer geeigneten Teilnehmerklasse eingerichtet sind, Camping auszuführen, wenn die Zelle verfügbar ist, wobei die Basisstation (BS) eingerichtet ist, in der Zelle (A, B, C, D1, D2) Informationen über die Priorität der Zelle und die von der Zelle unterstützten Teilnehmerklassen zu senden, um zu steuern, welchen Endgeräten (MS) erlaubt ist, in der Zelle (A, B, C, D1, D2) Camping auszuführen,
**dadurch gekennzeichnet, dass**
- die Zelle (A, B, C, D1, D2) zu einer Prioritätszelle bestimmt ist, in der die Endgeräte (MS) zu betreiben gewünscht werden, die einer speziellen Funktion zugeordnet sind;
- die Zelle (A, B, C, D1, D2) dazu bestimmt ist, die Teilnehmerklasse zu unterstützen, die der speziellen Funktion zugeordnet ist;
- die Zelle (A, B, C, D1, D2) dazu bestimmt ist, nur bestimmte Teilnehmerklassen zu unterstützen, die speziellen Funktionen zugeordnet sind; und
- die Zelle (A, B, C, D1, D2) dazu eingerichtet ist, ein Endgerät (MS), das einer geeigneten Teilnehmerklasse einer speziellen Funktion zugeordnet ist, zum Ausführen von Camping in der Zelle (A, B, C, D1, D2) zu leiten, wenn die Zelle (A, B, C, D1, D2) für das Endgerät (MS) verfügbar ist.

15. Basisstation nach Anspruch 14, **dadurch gekennzeichnet, dass** die Basisstation (BS) eingerichtet ist, Endgeräte (MS) zu unterstützen, die der Funkteilnehmerklasse zugeordnet ist.

16. Basisstation nach Anspruch 14, **dadurch gekennzeichnet, dass** die Basisstation (BS) eingerichtet ist, Funkendgeräte (MS) zu unterstützen, die zu der Teilnehmerklasse gehören, die Notfällen zugeordnet ist.

17. Endgerät (MS), das in einem zellularen Funksystem betrieben wird, eingerichtet, um in Funkzellen Camping auszuführen, welche die Teilnehmerklasse eines Teilnehmers unterstützen, der das Endgerät benutzt, und um dem Ausführen von Camping in ausgewählten Prioritätszellen (A, B, C, D1, D2) Priorität zu geben,
**dadurch gekennzeichnet, dass** das Endgerät (MS) eingerichtet ist, um
- die Teilnehmerklasse in Reaktion auf die Tatsache zu aktualisieren, dass das Endgerät (MS) in einer bestimmten Teilnehmerklasse in Benutzung genommen wird, wobei die Informationen über die Endgeräte-Teilnehmerklasse dann übertragen werden, um für ausgewählte Teile des Systems verfügbar zu sein;
- Camping auf einer Prioritätszelle (A, B, C, D1, D2) auszuführen, welche die Teilnehmerklasse des Teilnehmers unterstützt, der das Endgerät (MS) benutzt, wenn eine solche Zelle verfügbar ist; und
- Camping auf einer normalen Zelle, welche die Teilnehmerklasse des Teilnehmers unterstützt, der das Endgerät (MS) benutzt, nur dann auszuführen, wenn keine Prioritätszelle verfügbar ist.

18. Endgerät nach Anspruch 17, **dadurch gekennzeichnet, dass** das Endgerät eingerichtet ist, seine Teilnehmerklasse basierend auf Daten, die in dem Endgerät (MS) gespeichert sind, und/oder den Teilnehmerdaten des Endgerätebenutzers zu identifizieren.

19. Endgerät nach Anspruch 17, **dadurch gekennzeichnet, dass** das Endgerät (MS) eingerichtet ist, Informationen über seine Teilnehmerklasse von dem System zu empfangen.

20. Endgerät nach Anspruch 17, **dadurch gekennzeichnet, dass** das Endgerät (MS) eingerichtet ist, seine Teilnehmerklasse basierend auf Daten zu ermitteln, die durch eine Benutzerschnittstelle des Endgeräts (MS) des Teilnehmers bereitgestellt werden.

## Revendications

1. Procédé de réalisation de fonctions spéciales dans un système radio cellulaire dans lequel des terminaux (MS) sont agencés afin de donner la priorité à une mise en attente sur des cellules définies comme étant des cellules prioritaires supportant au moins une catégorie d'abonnés associée au terminal (MS), si cette cellule est disponible, le procédé comprenant
l'envoi des informations situées dans la cellule, relatives à la priorité de la cellule et aux catégories d'abonnés supportées par la cellule, afin de contrôler les terminaux (MS) qui sont autorisés à mettre en attente la cellule, en divisant les abonnés en abonnés à fonction spéciale et en abonnés autres, et
la division des cellules en cellules à fonctions spéciales (A, B, C, D1, D2) et en cellules normales (X, Y, Z, C1,..., C11),
**caractérisé par**
la définition des cellules associées à au moins une fonction spéciale comme étant des cellules prioritaires (A, B, C, D1, D2),
la définition selon laquelle les cellules prioritaires (A, B, C, D1, D2) dans lesquelles les terminaux (MS) associés à la fonction spéciale doivent fonctionner, supportent la catégorie d'abonnés associée à ladite fonction spéciale,
la définition selon laquelle les cellules normales (X, Y, Z, C1,..., C11) dans lesquelles les terminaux (MS) associés à la fonction spéciale doivent pouvoir fonctionner, supportent la catégorie d'abonnés associée à ladite fonction spéciale,
la définition selon laquelle les cellules prioritaires (A, B, C, D1, D2) supportent uniquement certaines catégories d'abonnés associées aux fonctions spéciales, et
l'orientation des terminaux (MS) associés à une fonction spéciale afin de mettre en attente les cellules prioritaires respectives (A, B, C, D1, D2) lorsque cette cellule est disponible.

2. Procédé selon la revendication 1, **caractérisé par** la définition des cellules destinées à être utilisées uniquement par des radios aériennes comme étant des cellules prioritaires et comme supportant les terminaux radio (MS) appartenant à une catégorie d'abonnés aériens, et également par la définition selon laquelle au moins une partie des cellules normales du système supporte les radios aériennes.

3. Procédé selon la revendication 1, **caractérisé par** la définition des cellules attribuées uniquement aux urgences comme étant des cellules prioritaires et comme supportant les terminaux radio appartenant à une catégorie d'abonnés associée aux urgences, et également par la définition selon laquelle au moins une partie des cellules normales du système supporte lesdits terminaux radio appartenant à la catégorie d'abonnés associée aux urgences.

4. Procédé selon la revendication 1, **caractérisé par** la définition selon laquelle les cellules normales (X, Y, Z, C1, ..., C11) du système supportent les terminaux radio appartenant aux catégories d'abonnés non associées à des fonctions spéciales.

5. Système radio cellulaire, dans lequel des paramètres sont utilisés afin de regrouper les abonnés en catégories d'abonnés, et lesdits paramètres peuvent être utilisés pour définir les catégories d'abonnés supportées pour les cellules, et dans lequel les cellules sélectionnées peuvent être définies comme étant des cellules prioritaires, sur lesquelles les terminaux (MS) ayant une catégorie d'abonnés appropriée sont agencés afin de les mettre en attente, si cette cellule est disponible, et dans lequel des stations de base (BS) sont agencées pour envoyer les informations situées dans la cellule, relatives à la priorité de la cellule et aux catégories d'abonnés supportées par la cellule, afin de contrôler les terminaux (MS) qui sont autorisés à mettre la cellule en attente, dans lequel les cellules qui ne sont pas définies comme étant des cellules prioritaires sont définies comme étant des cellules normales,
**caractérisé en ce que**
les cellules associées à une fonction spéciale sélectionnée sont définies comme étant des cellules prioritaires et comme supportant la catégorie d'abonnés associée à ladite fonction spéciale,
au moins une partie des cellules normales est également agencée afin de supporter la catégorie d'abonnés associée à ladite fonction spéciale, et
les terminaux (MS) associés à une fonction spéciale sont agencés afin de mettre en attente des cellules prioritaires respectives (A, B, C, D1, D2) lorsque cette cellule est disponible.

6. Système radio selon la revendication 5, **caractérisé par**
la définition des cellules destinées à être utilisées uniquement par des radios aériennes comme étant des cellules prioritaires (A, B, C, D1, D2) et comme supportant les terminaux radio (MS) appartenant à une catégorie d'abonnés aériens, et également par la définition selon laquelle au moins une partie des cellules normales (X, Y, Z, C1, C11) du système supporte les radios aériennes.

7. Système radio selon la revendication 5, **caractérisé par** la définition des cellules attribuées uniquement aux urgences comme étant des cellules prioritaires et comme supportant les terminaux radio appartenant à une catégorie d'abonnés associée aux urgences, et également par la définition selon laquelle au moins une partie des cellules normales du système supporte lesdits terminaux radio appartenant à la catégorie d'abonnés associée aux urgences.

8. Système radio selon la revendication 7, **caractérisé par** la définition des cellules normales (X, Y, Z, C1, ..., C11) du système comme supportant les terminaux radio appartenant aux catégories d'abonnés non associées aux fonctions spéciales.

9. Système radio selon la revendication 5, **caractérisé en ce que**, lorsqu'un terminal (MS) est utilisé dans une catégorie d'abonnés particulière, le terminal (MS) est agencé afin de mettre à jour la catégorie d'abonnés, et les informations relatives à la catégorie d'abonnés du terminal (MS) sont transférées afin d'être disponibles pour des parties sélectionnées du système.

10. Système radio selon la revendication 9, **caractérisé en ce que** le terminal (MS) est agencé afin d'identifier sa catégorie d'abonnés sur la base de données stockées dans le terminal (MS).

11. Système radio selon la revendication 9, **caractérisé en ce que** le terminal (MS) est agencé afin d'identifier la catégorie d'abonnés du terminal (MS) sur la base de données de terminal et/ou d'abonnés obtenues de la part du terminal (MS).

12. Système radio selon la revendication 9, 10 ou 11, **caractérisé en ce que** l'abonné peut fournir des informations relatives à la catégorie d'abonnés utilisée à l'aide d'une interface utilisateur du terminal (MS).

13. Système radio selon la revendication 11 ou 12, **caractérisé en ce que** le système est agencé pour
informer le terminal (MS) de la catégorie d'abonnés,
mettre à jour, à n'importe quel moment donné, les paramètres qui sont utilisés pour regrouper les abonnés en catégories d'abonnés, et
mettre à jour, à n'importe quel moment donné, les paramètres qui sont utilisés pour définir les catégories d'abonnés supportées pour les cellules.

14. Station de base (BS) de système radio destinée à réaliser des fonctions spéciales, dans laquelle des paramètres sont utilisés afin de définir les catégories d'abonnés supportées par une cellule, dans laquelle la cellule peut être définie comme étant une cellule prioritaire, sur laquelle des terminaux (MS) ayant une catégorie d'abonnés appropriée sont agencés afin de la mettre en attente, si la cellule est disponible, la station de base (BS) étant agencée pour envoyer les informations situées dans la cellule (A, B, C, D1, D2), relatives à la priorité de la cellule et aux catégories d'abonnés supportées par la cellule, afin de contrôler les terminaux (MS) qui sont autorisés à mettre en attente la cellule (A, B, C, D1, D2),
**caractérisé en ce que**
ladite cellule (A, B, C, D1, D2) est définie comme étant une cellule prioritaire dans laquelle les terminaux (MS) associés à une fonction spéciale doivent fonctionner,
ladite cellule (A, B, C, D1, D2) est définie comme supportant la catégorie d'abonnés associée à la fonction spéciale,
ladite cellule (A, B, C, D1, D2) est définie comme supportant uniquement certaines catégories d'abonnés associées à des fonctions spéciales, et
ladite cellule (A, B, C, D1, D2) est agencée afin d'orienter un terminal (MS) associé à la catégorie d'abonnés d'une fonction spéciale appropriée afin de mettre en attente la cellule (A, B, C, D1, D2) lorsque la cellule (, B, C, D1, D2) est disponible pour le terminal (MS).

15. Station de base selon la revendication 14, **caractérisée en ce que** la station de base (BS) est agencée afin de supporter les terminaux (MS) associés à la catégorie d'abonnés aériens.

16. Station de base selon la revendication 14, **caractérisée en ce que** la station de base (BS) est agencée afin de supporter les terminaux radio (MS) appartenant à la catégorie d'abonnés associée aux urgences.

17. Terminal (MS) fonctionnant dans un système radio cellulaire, agencé afin de mettre en attente des cellules radio supportant la catégorie d'abonnés d'un abonné utilisant le terminal, et de donner la priorité à la mise en attente sur des cellules prioritaires sélectionnées (A, B, C, D1, D2), **caractérisé en ce que** le terminal (MS) est agencé pour
mettre à jour la catégorie d'abonnés, en réponse au fait que le terminal (MS) soit utilisé dans une catégorie d'abonnés particulière, les informations relatives à la catégorie d'abonnés du terminal étant transférées afin d'être disponibles pour des parties sélectionnées du système,
mettre en attente une cellule prioritaire (A, B, C, D1, D2) supportant la catégorie d'abonnés de l'abonné utilisant le terminal (MS) lorsque cette cellule est disponible, et
mettre en attente une cellule normale supportant la catégorie d'abonnés de l'abonné utilisant le terminal (MS) uniquement si aucune cellule prioritaire n'est disponible.

18. Terminal selon la revendication 17, **caractérisé en ce que** le terminal est agencé pour identifier sa catégorie d'abonnés sur la base de données stockées dans le terminal (MS) et/ou des données d'abonné de l'utilisateur du terminal.

19. Terminal selon la revendication 17, **caractérisé en ce que** le terminal (MS) est agencé pour recevoir des informations relatives à sa catégorie d'abonnés de la part du système.

20. Terminal selon la revendication 17, **caractérisé en ce que** le terminal (MS) est agencé pour identifier sa catégorie d'abonnés sur la base de données fournies par une interface utilisateur du terminal (MS) de l'abonné.
